(19) **Europäisches Patentamt**
**European Patent Office**
**Office européen des brevets**

(11) **EP 4 455 342 A1**

(12) **EUROPEAN PATENT APPLICATION**
published in accordance with Art. 153(4) EPC

(43) Date of publication:
**30.10.2024 Bulletin 2024/44**

(21) Application number: **22911834.4**

(22) Date of filing: **20.12.2022**

(51) International Patent Classification (IPC):
*C22C 38/34* (2006.01)   *C22C 38/20* (2006.01)
*C22C 38/22* (2006.01)   *C21D 8/12* (2006.01)
*H01F 1/147* (2006.01)

(52) Cooperative Patent Classification (CPC):
**C21D 8/12; C22C 38/20; C22C 38/22; C22C 38/34;**
**H01F 1/147**

(86) International application number:
**PCT/KR2022/020774**

(87) International publication number:
**WO 2023/121201 (29.06.2023 Gazette 2023/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **22.12.2021 KR 20210184551**

(71) Applicant: POSCO Co., Ltd
**Pohang-si, Gyeongsangbuk-do 37859 (KR)**

(72) Inventors:
• **SONG, DaeHyun**
  **Pohang-si, Gyeongsangbuk-do 37859 (KR)**
• **LEE, Sangwoo**
  **Pohang-si, Gyeongsangbuk-do 37859 (KR)**
• **PARK, Junesoo**
  **Pohang-si, Gyeongsangbuk-do 37859 (KR)**

(74) Representative: **Meissner Bolte Partnerschaft**
**mbB**
**Patentanwälte Rechtsanwälte**
**Postfach 86 06 24**
**81633 München (DE)**

(54) **GRAIN-ORIENTED ELECTRICAL STEEL SHEET AND MANUFACTURING METHOD THEREFOR**

(57)    The present invention relates to a grain-oriented electrical steel sheet and a manufacturing method therefor. The grain-oriented electrical steel sheet according to one embodiment of the present invention may comprise, in wt%, 2.0 to 6.0 wt% of Si, 0.005 to 0.04 wt% of acid-soluble Al, 0.01 to 0.2 wt% of Mn, at most 0.01 wt% of N, 0.0005 to 0.045 wt% of P, at most 0.010 wt% of S, 0.01 to 0.05 wt% of Sb, at most 0.005 wt% of C, 0.03 to 0.08 wt% of Sn, 0.01 to 0.2 wt% of Cr, 0.031 to 0.25 wt% of Cu, 0.01 to 0.05 wt% of Mo, and the remainder in Fe and other unavoidable impurities, and satisfy Formula 1.

<Formula 1>

$$0.03 < [Sn] < \left| \sqrt{[Cu] + [Sb] - 0.3^2} \right|$$

(In formula 1, [Sn], [Cu], and [Sb] represent the wt% of Sn, Cu, and Sb, respectively, √ represents a square root, and | | represents an absolute value).

EP 4 455 342 A1

**Description**

**[Technical Field]**

The present disclosure relates to an electrical steel sheet, and more specifically, to a grain-oriented electrical steel sheet and a manufacturing method therefor.

**[Background Art]**

A grain-oriented electrical steel sheet is a soft magnetic material with excellent magnetic properties in one direction or a rolling direction since a texture of a bloom with respect to the rolling direction is a Goss texture, which is {110}<001 >. In order to reveal such a texture, complicated processes such as component control in steelmaking, slab reheating and hot rolling process factor control in hot rolling, hot-rolled sheet annealing heat treatment, cold rolling, primary recrystallization annealing, and secondary recrystallization annealing, and the like, are required, and need to be very precisely and strictly managed.

In the above process, it is also very important to control inhibitors, which is one of the factors revealing the Goss texture, for example, grain growth inhibitors that inhibit indiscriminate growth of primary recrystallization grains and allows only the Goss texture to be grown when secondary recrystallization occurs, which is a phenomenon that occurs when the inhibitors decompose or lose their inhibitory power in an appropriate temperature range. In order to obtain the Goss texture in final annealing, growth of all the primary recrystallized grains needs to be inhibited until just before the secondary recrystallization occurs, and in order to obtain sufficient inhibition ability for the inhibition of the growth, an amount of the growth inhibitors needs to be sufficiently large and a distribution of the inhibitors needs to be uniform. In addition, in order for the secondary recrystallization to occur during a high-temperature final annealing process, the inhibitors need to have excellent thermal stability so as not to be easily decomposed.

The quality of a grain-oriented electrical steel sheet may be evaluated by a magnetic flux density and core loss, and the higher the precision of the Goss texture, the more excellent the magnetic properties. A grain-oriented electrical steel sheet, which is of excellent quality due to excellent magnetic flux density and low core loss, may manufacture an electric power device having high efficiency, such that miniaturization and efficiency improvement of the electric power device may be accomplished.

In order to manufacture such high-quality grain-oriented electrical steel sheets, low core loss is provided by increasing a content of Si in fired steel, but there is a problem that cold rolling properties are limited. To overcome the above problem, attempts are being made to use siliconizing or to perform warm rolling through heating in an appropriate temperature range.

In a method of utilizing the siliconizing, the methods of siliconizing the steel sheet with $SiCl_4$ gas through chemical vapor deposition or siliconizing the steel sheet through a powder metallurgy method have problems such as a high facility investment cost in implementing technology and difficulty in achieving a target thickness due to a high content of silicon. In the technology of performing warm rolling through heating in the appropriate temperature range, there is a problem that it is not commercially viable because auxiliary facilities such as a heating furnace are required.

In addition, as a method of improving the magnetic properties of electrical steel sheets, unlike the technology that utilizes crystal grain growth inhibition ability caused by precipitates, a technology for increasing a fraction of Goss texture after high-temperature secondary recrystallization annealing by adding alloy elements that may achieve a similar level of inhibition ability as precipitates, a technique for increasing a fraction of Goss texture among primary recrystallization textures during a primary recrystallization annealing process to increase a fraction of secondary recrystallization microstructure of the Goss texture after high-temperature secondary recrystallization annealing, and a technique for uniformly distributing a size of the primary recrystallized crystal grains to prevent the growth of a texture that is not at all helpful in improving magnetic properties due to the non-uniformity of the primary recrystallized microstructure may be utilized.

In the method of adding alloying elements to a steel sheet among the above technologies, it was proposed to add boron (B) and titanium (Ti) to reinforce the weakening of the inhibition of crystal growth by once cold rolling. However, the boron is not easy to control in a steelmaking stage due to the addition of a small amount, and coarse BN may easily be formed in the steel after adding the boron. As the titanium also forms TiN or TiC with a solid-dissolving temperature of 1,300°C or more, it may exist even after secondary recrystallization, resulting in creased core loss.

It has been proposed to add selenium (Se) and boron (B) as crystal grain growth inhibitors, but the effect of the added boron is effective only when an appropriate amount of nitrogen (N) is included in the fired steel, and is ineffective when a content of nitrogen is less than 10 ppm. When MnSe and Sb are added as crystal grain growth inhibitors, a high magnetic flux density may be achieved due to high crystal grain growth inhibition ability, but the material itself becomes weak, making once cold rolling impossible. Therefore, when an intermediate annealing is carried out, the manufacturing cost may be increased by performing cold rolling twice, and the manufacturing cost may be increased by using expensive Se.

As a technique for inhibiting crystal grain growth, in a method in which a combination of tin (Sn) and chromium (Cr) is added and a slab is heated at a temperature of 1,200°C or less, hot-rolled, intermediate annealed, cold-rolled once or twice, decarbonization annealed, and nitrided using ammonia gas, a hot-rolled sheet annealing process may be complicated by strictly controlling a hot-rolled sheet annealing temperature depending on acid-soluble aluminum (Al) and a nitrogen content in the fired steel. In addition, due to chromium (Cr), which has a strong oxygen affinity, an oxide layer formed in a decarburization nitriding annealing process is formed quite densely, making it difficult to decarburize and nitrify, and the tin, which is a grain boundary segregation element, may also make it difficult to decarburize and nitrify.

When copper (Cu) is added as crystal growth inhibitors, molybdenum (Mo) may be provided to control a size of the precipitate by the copper, and the content of tin or manganese may also cause the precipitate to become coarse and non-uniform.

**[Disclosure]**

**[Technical Problem]**

The technical problem to be solved by the present disclosure is to provide a grain-oriented electrical steel sheet with improved magnetic properties by addressing the limitations of magnetic property enhancement.

Another technical problem to be solved by the present disclosure is to provide a method of manufacturing a grain-oriented electrical steel sheet having the above advantages.

**[Technical method]**

According to an embodiment of the present disclosure, a grain-oriented electrical steel sheet may contain, in wt%, 2.0 to 6.0 wt% of Si, 0.005 to 0.04 wt% of acid-soluble Al, 0.01 to 0.2 wt% of Mn, 0.01 wt% or less of N, 0.0005 to 0.045 wt% of P, 0.010 wt% or less of S, 0.01 to 0.05 wt% of Sb, 0.005 wt% or less of C, 0.03 to 0.08 wt% of Sn, 0.01 to 0.2 wt% of Cr, 0.031 to 0.25 wt% of Cu, 0.01 to 0.05 wt% of Mo, and the remainder of Fe and other unavoidable impurities, wherein the following Equation 1 may be satisfied:

<Equation 1>

$$0.03 < [Sn] < \left| \sqrt{[Cu]} + [Sb] - 0.3^2 \right|$$

wherein [Sn], [Cu], and [Sb] refer to the wt% of Sn, Cu, and Sb, respectively, $\sqrt{}$ refers to a square root, and | | refers to an absolute value.

In an embodiment, the grain-oriented electrical steel sheet may satisfy the following Equation 2:

<Equation 2>

$$\left| \sqrt{[Cu]} - 0.2 \right| < 0.3$$

wherein [Cu] refers to the wt% of Cu, $\sqrt{}$ refers to a square root, and | | refers to an absolute value.

In an embodiment, the grain-oriented electrical steel sheet may have a magnetic permeability of 15,000 or more.

According to another embodiment of the present disclosure, a method of manufacturing a grain-oriented electrical steel sheet, containing, in wt%, 2.0 to 6.0 wt% of Si, 0.005 to 0.04 wt% of acid-soluble Al, 0.01 to 0.2 wt% of Mn, 0.01 wt% or less of N, 0.0005 to 0.045 wt% of P, 0.010 wt% or less of S, 0.01 to 0.05 wt% of Sb, 0.02 to 0.08 wt% of C, 0.03 to 0.08 wt% of Sn, 0.03 to 0.08 wt% of Sn, 0.01 to 0.2 wt% of Cr, 0.031 to 0.25 wt% of Cu, 0.01 to 0.05 wt% of Mo, and the remainder of Fe and other unavoidable impurities, may include: heating a slab satisfying the following Equation 1, manufacturing a hot-rolled steel sheet by hot rolling the heated slab, cold rolling the hot-rolled steel sheet obtained through heat treatment, performing primary recrystallization on the cold-rolled steel sheet obtained through the cold rolling, and performing secondary recrystallization on the cold-rolled steel sheet that is subjected to the primary recrystallization.

<Equation 1>

$$0.03 < [Sn] < \left| \sqrt{[Cu]} + [Sb] - 0.3^2 \right|$$

wherein [Sn], [Cu], and [Sb] refer to the wt% of Sn, Cu and Sb, respectively, $\sqrt{\ }$ refers to a square root, and | | refers to an absolute value.

In an embodiment, the reheating of the slab may be carried out at 1,250°C or less. In an embodiment, the method may further include, after the manufacturing of the hot-rolled steel sheet, heat-treating the hot-rolled steel sheet, wherein the heat-treating of the hot-rolled steel sheet may be carried out at 1,000 to 1,150°C.

In an embodiment, the method may further include, after the cold rolling of the hot-rolled steel sheet, performing intermediate annealing on the cold-rolled steel sheet that is subjected to primary cold rolling. In an embodiment, the method may further include, after the performing of the intermediate annealing on the cold-rolled steel sheet, performing secondary cold rolling on the cold-rolled steel sheet.

In an embodiment, in the performing of the primary recrystallization on the cold-rolled steel sheet, decarburization annealing and nitriding may be carried out simultaneously on the cold-rolled steel sheet obtained through the cold rolling. In an embodiment, the performing of the secondary recrystallization on the cold-rolled steel sheet may be carried out at a temperature equal to or more than a decarbonization temperature at which the primary recrystallization is completed and equal to or less than 1,230°C.

[Advantageous Effects]

By controlling the contents of antimony, tin, and copper in a grain-oriented electrical steel sheet according to an embodiment of the present disclosure, core loss and magnetic flux density may be simultaneously improved to provide a grain-oriented electrical steel sheet with excellent magnetic properties.

In addition, the method of manufacturing a grain-oriented electrical steel sheet according to another embodiment of the present disclosure may manufacture a grain-oriented electrical steel sheet having the above advantages.

[Mode for Invention]

Terms such as first, second, and third are used to describe, but are not limited to, various parts, components, regions, layers, and/or sections. These terms are used only to distinguish one part, component, area, layer, or section from another part, component, area, layer, or section. Thus, a first part, component, region, layer, or section described below may be referred to as a second part, component, region, layer, or section without departing from the scope of the present disclosure.

Technical terms used herein are to mention only a specific exemplary embodiment, and are not to limit the present disclosure. Singular forms used herein include plural forms as long as phrases do not clearly indicate an opposite meaning. A term "including" as used herein concretely indicates specific properties, regions, integer numbers, steps, operations, elements, and/or components, and is not to exclude presence or addition of other properties, regions, integer numbers, steps, operations, elements, and/or components.

When a part is referred to as being "on" or "over" another part, it may be directly on or over the other part, or it may be accompanied by another part in between. In contrast, when a part is referred to as being "directly on" another part, no other parts are interposed between them.

Unless otherwise defined, all terms used herein, including technical and scientific terms, have the same meaning as commonly understood by one of ordinary skill in the technical field to which the present disclosure belongs. Terms defined in a generally used dictionary are additionally interpreted as having the meaning matched to the related art document and the currently disclosed contents and are not interpreted as ideal or formal meaning unless defined.

In addition, unless otherwise stated, % refers to wt%, and 1 ppm is 0.0001 wt%.

In an embodiment of the present disclosure, further including an additional element refers to replacing the remainder of iron (Fe) by the amounts of additional elements added.

Hereinafter, embodiments of the present disclosure will be described in detail so that one having ordinary skill in the art to which the present disclosure belongs may readily practice it. However, the present disclosure may be implemented in many different forms and is not limited to the embodiments described herein.

A grain-oriented electrical steel sheet according to an embodiment of the present disclosure may contain, in wt%, 2.0 to 6.0 wt% of Si, 0.005 to 0.04 wt% of acid-soluble Al, 0.01 to 0.2 wt% of Mn, 0.01 wt% or less of N, 0.005 to 0.045 wt% of P, 0.010 wt% or less of S, 0.01 to 0.05 wt% of Sb, 0.005 wt% or less of C, 0.03 to 0.08 wt% of Sn, 0.03 to 0.08 wt% of Sn, 0.01 to 0.2 wt% of Cr, 0.03 to 0.25 wt% of Cu, 0.01 to 0.05 wt% of Mo, and the remainder of Fe and other unavoidable impurities.

Hereinafter, the reason for limiting the alloy components will be explained. Hereinafter, wt% is expressed as %.

Si : 2.0 to 6.0%

Silicon (Si), which is a basic composition of the grain-oriented electrical steel sheet, serves to increase a specific resistance of a material to decrease core loss. The content of the silicon may be 2.0 to 6.0%. Specifically, the content of silicon may be 2.0 to 5.0%. If the content of silicon is within the above range, the grain-oriented electrical steel sheet may have stable secondary recrystallization formation, excellent magnetic properties, and excellent workability.

If the content of silicon is excessively high, during the decarbonization nitriding annealing, SiO2 and Fe2SiO4 oxide layers are excessively and densely formed to delay decarbonization behavior. Therefore, phase transformation between ferrite and austenite occurs continuously during the decarbonization nitriding annealing, such that a primary recrystallization texture is severely damaged. Nitriding behavior is delayed due to a decarbonization behavior delay effect depending on the formation of the dense oxide layer described above, such that nitrides such as (Al,Si,Mn)N, AlN, and the like, are not sufficiently formed. Therefore, sufficient crystal grain inhibition ability required for the secondary recrystallization during the high-temperature annealing may not be secured. If the content of silicon is more excessive, a brittleness and a roughness, which are mechanical characteristics of the grain-oriented electrical steel sheet, are increased and decreased, respectively, resulting an increase in a sheet fracture occurrence rate during a rolling process. Therefore, weldability between sheets is degraded, such that easy workability may not be secured.

If the content of silicon is excessively low, the specific resistance is decreased, such eddy current loss is increased, and core loss properties are thus degraded. In addition, during the decarbonization nitriding annealing, the phase transformation between ferrite and austenite becomes active, such that a primary recrystallization texture is severely damaged. In addition, during the high-temperature annealing, the phase transformation between ferrite and austenite occurs, such that secondary recrystallization becomes unstable, and a {110} Goss texture is severely damaged.

Al : 0.005 to 0.04 wt%

Aluminum (Al) forms AlN finely precipitated during hot rolling and hot-rolled sheet annealing, and is combined with Al, Si, and Mn in which nitrogen ions introduced by an ammonia gas exist in a solid-dissolved state within steel during an annealing process after cold rolling to form (Al, Si, Mn) N and AlN type nitrides, thereby acting as strong crystal grain growth inhibitors. The content of the aluminum may be 0.005 to 0.04 wt%.

If the content of aluminum is excessively high, coarse nitrides are formed, such that crystal grain growth inhibition ability is degraded. If the content of aluminum is excessively low, the number and a volume of crystal grain growth inhibitors of (Al, Si, Mn)N and AlN type nitrides are significantly low, such that a sufficient effect as the crystal grain growth inhibitors may not be expected.

Mn : 0.01 to 0.2 wt%

Manganese (Mn) increases the specific resistance to decrease the eddy current loss, resulting in a decrease in entire core loss, similar to Si. In addition, Mn forms an Mn-based sulfide by reacting to S in a fired steel state, and forms a precipitate of (Al, Si, Mn) N by reacting to nitrogen introduced by the nitriding together with Si. Therefore, Mn is an important element in inhibiting growth of primary recrystallized grains and causing the secondary recrystallization. Further, the manganese may react with sulfur (S) to form sulfide (MnS), and the sulfide has the effect of contributing to the formation, size, and dispersion of copper sulfide (CuS). The content of the manganese may be 0.01 to 0.2%.

If the content of manganese is excessively high, large amounts of (Fe, Mn) and Mn oxides are formed in addition to $Fe_2SiO_4$ on a surface of the steel sheet to hinder the base coating from being formed during the high-temperature annealing, resulting in deterioration of surface quality. In addition, since phase transformation between ferrite and austenite is caused during a high-temperature annealing process, the texture is severely damaged, such that the magnetic properties are significantly degraded. In addition, if the content of manganese is excessively high, in relation to the sulfur, the copper sulfide is formed in a very fine and excessive amount, so that the inhibitor effect becomes excessively strong. Therefore, by hindering the secondary recrystallization of Goss-oriented crystal grains at an appropriate time, the magnetic properties become excessive, and there is a problem in causing a stable secondary recrystallization.

If the content of manganese is excessively low, the number and a volume of (Al, Si, Mn) N precipitates formed are significantly low, such that a sufficient effect as the crystal grain growth inhibitors may not be expected. If the content of manganese is excessively low, in relation to the sulfur, there is a problem in that the copper sulfide is formed coarsely and non-uniformly, such that the inhibitor effect is insufficient due to the copper sulfide.

N : 0.01% or less

Nitrogen (N) is an important element that reacts with aluminum to form aluminum nitride (AlN). Nitrogen additionally required in order to form nitrides such as (Al,Si,Mn)N, AlN, (Si,Mn)N through the nitrogen, may be reinforced by performing the nitriding in steel using an ammonia gas in the annealing process after the cold rolling.

The content of the nitrogen may be 0.01% or less. If the content of the nitrogen is excessively high, a blister, for example, a surface defect is caused by nitrogen diffusion in a process after hot rolling. In addition, since an excessive large amount of nitrides are formed in a slab state, rolling becomes difficult, such that a complexity of the process may be increased and a manufacturing cost may be increased.

C: 0.02 to 0.08%

Carbon (C) is an element contributing to crystal grain refinement and improvement of an elongation percentage by causing phase transformation between ferrite and austenite, and is an essential element for improving rolling properties of the grain-oriented electrical steel sheet having poor rolling properties due to a high brittleness. However, since C is an element deteriorating the magnetic properties by precipitating carbides formed due to a magnetic aging effect in the grain-oriented electrical steel sheet in a case in which it remains in the finally manufactured grain-oriented electrical steel sheet. Therefore, the finally manufactured grain-oriented electrical steel sheet may further contain C in an amount of 0.01 wt% or less. More specifically, it may further contain C in an amount of 0.005 wt% or less.

The content of carbon in the slab may be 0.02 to 0.08%. If the content of the carbon in the slab is excessively high, a sufficient decarburization effect may not be obtained in a decarbonization annealing process, so a separate process or equipment may be required, and a sufficient decarburization effect may not be obtained. Therefore, a secondary recrystallization texture is severely damaged due to a phase transformation phenomenon, and a deterioration phenomenon of the magnetic properties by magnetic aging is caused when a final product is applied to an electric power device.

If the content of the carbon in a slab steel is excessively low, the phase transformation between the ferrite and the austenite is not occur sufficiently, which causes non-uniformity of a slab and a hot-rolled microstructure. Therefore, the cold rolling properties are reduced.

S: 0.010% or less

Sulfur (S) plays a role in suppressing crystal grain growth by forming precipitates of manganese sulfide (MnS) or copper sulfide (CuS) in the slab. The content of the sulfur may be 0.010% or less.

If the content of the sulfur is excessively high, the sulfur is segregated at a central portion of the slab during casting and the precipitates of the manganese sulfide or copper sulfide are not uniformly deposited during a subsequent hot rolling process, resulting in a problem of non-uniform microstructure. In addition, if the content of the sulfur is excessively high, the formation of the manganese sulfide or the copper sulfide occurs unstably, such that the sulfide control by tin (Sn) or antimony (Sb) described hereinafter is not easy.

P: 0.0005 to 0.045%

Phosphorus (P) is segregated in grain boundaries to hinder movement of the grain boundaries, and at the same time, may play an auxiliary role of inhibiting crystal grain growth. Therefore, there is an effect of improving a {110}<001> texture in terms of a microstructure. The content of the phosphorus may be 0.0005 to 0.045%.

If the content of the phosphorus is excessively high, the brittleness of the electrical steel sheet increases and thus the rolling properties are degraded. If the content of the phosphorus is excessively low, there is a problem that the effect of adding phosphorus to hinder the movement of the grain boundaries, and at the same time, inhibit crystal grain growth may not be expressed.

Cr: 0.01 to 0.2%

Chromium (Cr) promotes formation of a hard phase in a hot-rolled annealed steel sheet to promote formation of {110}<001> of the Goss texture during the cold rolling. In addition, Cr promotes decarbonization during a decarbonization annealing process and plays a role in reducing an austenite phase transformation maintaining time to prevent the phenomenon of damage to the texture due to the prolonged austenite phase transformation maintaining time, which is a problem that may occur if the content of the carbon is high. Furthermore, Cr may promote formation of an oxide layer of a surface formed during the decarbonization annealing process, thereby overcoming the problem of inhibiting the formation of the oxide layer due to tin (Sn) and antimony (Sb) among the alloy elements used as crystal grain growth auxiliary inhibitors. The content of the chromium may be 0.01 to 0.2%.

If the content of the chromium is excessively high, it encourages the oxide layer to be formed more densely during the decarburization annealing process, resulting in poor oxide layer formation and hindering the decarburization and the nitriding. If the content of the chromium is excessively high, there is an uneconomical problem because the chromium is an expensive alloying element. If the content of the chromium is excessively low, the effect of reducing the above-mentioned austenite phase transformation maintaining time or solving the problem of inhibiting the formation of an oxide layer is insignificant.

Cu: 0.031 to 0.25%

Copper (Cu) not only has the effect of increasing the fraction of Goss-oriented crystal grains by promoting shear deformation during hot rolling, but also forms sulfide to improve crystal grain growth inhibition ability, thereby increasing a degree of integration during secondary recrystallization of Goss-oriented crystal grains. When the sulfide is formed, copper sulfide may precipitate alone, but if manganese is contained in the fired steel, it may also affect the precipitation of manganese sulfide, and if aluminum is contained in the fired steel, it may also affect aluminum nitride.

As the copper sulfide precipitates first, the copper acts as a base for manganese sulfide or aluminum nitride, which affects the behavior of the manganese sulfide or aluminum nitride depending on the content. The content of the copper may be 0.031 to 0.25%.

Accordingly, when copper is contained in an appropriate amount, secondary recrystallization may be stabilized and the degree of integration of Goss-oriented crystal grains where the secondary recrystallization occurred may be improved, thereby improving a magnetic permeability of a product sheet after high-temperature annealing. If the copper is not contained in an appropriate amount, the precipitates are coarse and non-uniformly deposited, resulting in a non-uniform crystal grain growth inhibition ability, such that secondary recrystallization of the Goss-oriented crystal grains may become unstable, or the degree of integration of the Goss-oriented crystal grains where secondary recrystallization has occurred may be degraded.

Specifically, if the content of the copper is excessively high, the copper sulfide becomes excessively coarse, such that the crystal grain growth inhibition ability may be degraded. If the content of the copper is excessively low, there is a problem in that the desired effect of increasing the fraction of Goss-oriented crystal grains is not achieved, and the effect on the precipitation of manganese sulfide or aluminum nitride precipitates is low.

Mo: 0.01 to 0.05%

Molybdenum (Mo) is a grain boundary segregation element, is relatively larger than the base metal iron (Fe) and has a very high melting point of about 2,600°C, such that the crystal grain growth ability is excessively strong. Therefore, Mo is an effective element for secondary recrystallization of Goss-oriented crystal grains and improvement of the degree of integration of Goss-oriented crystal grains during high-temperature annealing. Mo has the effect of promoting shear deformation during hot rolling and increasing the fraction of the Goss-oriented crystal grains in the hot-rolled texture. The content of the Molybdenum may be 0.01 to 0.05%.

If the content of the molybdenum content is excessively high, during the decarburization annealing process, segregation in a surface layer part may become excessively strong to hinder the formation of an appropriate oxide layer and cause excessive fineness of the primary recrystallization microstructure. If the content of the molybdenum is excessively low, the effect of adding molybdenum as described above is not expressed.

Sb : 0.01 to 0.05 wt%

Antimony (Sb) is segregated in the grain boundaries and inhibitors the growth of crystal grains and precipitates such as copper sulfide and manganese sulfide, which has the effect of causing fine precipitation and stabilizing secondary recrystallization. However, due to its low melting point, antimony is easy to diffuse and concentrate in an outmost surface layer part during the primary recrystallization annealing to hinder decarburization, oxide layer formation, and nitriding.

The content of the antimony may be 0.01 to 0.05%. Specifically, the content of the antimony may be 0.011 to 0.049%. If the content of the antimony content is within the above range, the copper sulfide and the manganese sulfide are refined to enhance secondary recrystallization of the Goss-oriented crystal grains

In addition, if the content of the antimony content is within the above range, it can be confirmed that secondary recrystallization is stabilized and the degree of integration of Goss-oriented crystal grains where secondary recrystallization occurred is improved, thereby improving a magnetic permeability of the product sheet after-high temperature annealing.

If the content of the antimony is excessively high, the problems that hinder decarburization, formation of an oxide layer, and nitriding are intensified. If the content of the antimony is excessively low, the refinement effect of the sulfides is not expressed.

Sn: 0.03 to 0.08%

Tin (Sn) is a grain boundary segregation element and has the effect of hindering the movement of grain boundaries and increasing the fraction of Goss-oriented crystal grains in the texture of hot-rolled steel sheets. In addition, the tin has the effect of refining copper sulfide, manganese sulfide, and aluminum nitride, similar to the above-mentioned antimony, and specifically, has the effect of uniformly dispersing and precipitating the sulfides. In addition, the tin has the effect of precipitating aluminum nitride finely and uniformly.

The content of the tin may be 0.03 to 0.08%. In addition, if the content of the tin is within the above range, secondary recrystallization is stabilized and the degree of integration of Goss-oriented crystal grains where secondary recrystallization occurred is improved, thereby improving a magnetic permeability of the product sheet after-high temperature annealing.

If the content of the tin is excessively high, the grain growth inhibition ability becomes excessively strong, making it impossible to obtain stable secondary recrystallization. If the content of the tin is excessively low, copper sulfide, manganese sulfide, or aluminum sulfide may be precipitated coarsely and non-uniform ly.

The grain-oriented electrical steel sheet contains the remainder of iron (Fe). Additionally, the grain-oriented electrical steel sheet may contain unavoidable impurities. Inevitable impurities refer to impurities that are inevitably mixed during a manufacturing process of steelmaking and grain-oriented electrical steel sheets. Since the inevitable impurities are widely known, detailed descriptions are omitted. In an embodiment of the present disclosure, the addition of elements other than the above-mentioned alloy components is not excluded, and various elements may be included within a range that does not impair the technical spirit of the present disclosure. If additional elements are contained, they are contained by replacing the remainder of Fe.

In an embodiment, the grain-oriented electrical steel sheet may satisfy the following Equation 2:

<Equation 1>

$$0.03 < [Sn] < \left| \sqrt{[Cu]} + [Sb] - 0.3^2 \right|$$

wherein [Cu], [Sn], and [Sb] refer to the wt% of Cu, Sn, and Sb, respectively, $\sqrt{}$ refers to a square root, and $| \,\, |$ refers to an absolute value.

Equation 1 above shows an Equation for copper and tin among the elements of the grain-oriented electrical steel sheet. If the range of Equation 1 is satisfied, there is an advantage that precipitates containing sulfide may be finely and uniformly precipitated. If the range of Equation 1 is not satisfied, the precipitates containing sulfide are coarsely and non-uniformly precipitated, making it impossible to stably secure Goss-oriented crystal grains with a high degree of integration.

In an embodiment, the grain-oriented electrical steel sheet may satisfy the following Equation 2:

<Equation 2>

$$\left| \sqrt{[Cu]} - 0.2 \right| \leq 0.3$$

wherein [Cu] refers to the wt% of Cu, $\sqrt{}$ refers to a square root, and $| \,\, |$ refers to an absolute value.

Equation 2 above is an Equation for the content of copper element among the elements of the grain-oriented electrical steel sheet. If the range of Equation 2 is satisfied, the secondary recrystallization is stabilized and the degree of integration of Goss-oriented crystal grains where secondary recrystallization occurred is improved, thereby improving a magnetic permeability of the product sheet after-high temperature annealing. If the range of Equation 2 is not satisfied, the copper content is increased, such that copper sulfide becomes excessively coarse. Therefore, crystal grain growth inhibition ability may be degraded.

In an embodiment, the grain-oriented electrical steel sheet may have a magnetic permeability of 15,000 or more.

A method of manufacturing a grain-oriented electrical steel sheet according to another embodiment of the present disclosure includes: heating a slab, manufacturing a hot-rolled steel sheet by hot rolling the heated slab, manufacturing a cold-rolled steel sheet by cold rolling the hot-rolled steel sheet, performing primary recrystallization annealing on the cold-rolled steel sheet, and performing secondary recrystallization annealing on the cold-rolled steel sheet that is subjected to the primary recrystallization annealing.

First, the slab was heated. Since the alloy composition of the slab has been described in relation to the alloy composition of the grain-oriented electrical steel sheet, an overlapped description will be omitted. Specifically, the slab contains, in wt%, 2.0 to 6.0 wt% of Si, 0.005 to 0.04 wt% of acid-soluble Al, 0.01 to 0.2 wt% of Mn, 0.01 wt% or less of N, 0.005 to 0.045 wt% of P, 0.010 wt% or less of S, 0.01 to 0.05 wt% of Sb, 0.03 to 0.25 wt% of C, 0.03 to 0.08 wt% of Sn, 0.03 to 0.08 wt% of Sn, 0.01 to 0.2 wt% of Cr, 0.03 to 0.25 wt% of Cu, 0.01 to 0.05 wt% of Mo, and the remainder of Fe and other unavoidable impurities.

Returning to the description of the manufacturing method, the slab may be heated to 1250°C or less when heated. This may cause the precipitates of Al-based nitride or Mn-based sulfide are incompletely solution-treated or completely solution-treated depending on a chemical equivalent relationship between Al and N, M and S that are solid-dissolved.

Next, when the heating of the slab is completed, hot rolling is carried out to manufacture a hot-rolled steel sheet. The hot-rolled steel sheet may have a thickness of 1.0 to 3.5 mm.

Subsequently, annealing of the hot-rolled sheet may carried out. In the hot-rolled steel sheet annealing step, a cracking temperature may be 800 to 1300°C. When the hot-rolled steel sheet annealing is carried out, the non-uniform microstructure and precipitates of the hot-rolled steel sheet may be homogenized, but it is also possible to omit this.

Next, the hot-rolled steel sheet is cold-rolled to manufacture a cold-rolled steel sheet. In the cold rolling step, once cold rolling or twice or more cold rolling including intermediate annealing may be carried out. The cold-rolled steel sheet may have a thickness of 1.0 to 0.5 mm.

Next, the cold-rolled steel sheet is subjected to primary recrystallization annealing. Here, the primary recrystallization annealing step may include a decarburization step and a nitriding step. The decarburization step and the nitridation step may be carried out in any order. For example, a decarburization step may be followed by the nitriding step, or a nitriding step may be followed by a decarburization step. In an embodiment, the method may include performing primary recrystallization by simultaneously performing decarbonization and nitriding on the cold-rolled steel sheet obtained through the cold rolling. Specifically, the decarburization step and the nitriding step may be carried out simultaneously. In the decarburization step, C may be decarburized to 0.01 wt% or less. More specifically, C may be decarburized to 0.005 wt% or less.

The nitriding step is for nitriding the steel sheet, is a step of introducing nitrogen ions into the steel sheet, and is a step of precipitating precipitates such as (Al, Si, Mn)N or AlN, which are crystal growth inhibitors. Through the nitriding step, the grain-oriented electrical steel sheet may be nitrided so that the nitrogen content is 0.01% or less.

In the primary recrystallization annealing step, the annealing temperature may be within a range of 800 to 950°C. If the range of annealing temperature is outside the upper limit, the recrystallized grains grow coarsely, such that crystal growth driving force is decreased. Thus, stable secondary recrystallization is not formed. If the range of annealing temperature is outside the lower limit, excessive time is taken during decarburization.

The primary recrystallization annealing step may be carried out in a nitrogen, hydrogen, or a mixed gas atmosphere thereof. For example, the gas atmosphere may be an ammonia gas atmosphere. The gas atmosphere may be carried out in a wet atmosphere or a dry atmosphere.

After the primary recrystallization annealing step, an annealing separator may be applied to the steel sheet. For example, as the annealing separator, an annealing separator containing MgO as a main component may be used. Since the annealing separator is widely known, detailed description is omitted.

Next, the cold-rolled steel sheet subjected to the primary recrystallization annealing is subjected to secondary recrystallization annealing.

The purpose of the secondary recrystallization annealing is, broadly speaking, to form {110}<001> texture by the secondary recrystallization, provide insulation by forming a glassy film by the reaction of MgO with the oxide layer formed during primary recrystallization annealing, and remove impurities that impair magnetic properties. In the annealing method, a mixed gas of nitrogen and hydrogen is maintained in a temperature rise section before secondary recrystallization occurs to protect nitride, which is a grain growth inhibitor, and allow secondary recrystallization to develop well. After the secondary recrystallization is completed, the cracking stage is maintained in a 100% hydrogen atmosphere for a long time to remove impurities.

In the secondary recrystallization annealing step, the secondary recrystallization may be completed at a temperature of 900 to 1,250°C. Specifically, in the secondary recrystallization annealing step, the secondary recrystallization may be completed at a temperature of 1,230°C or less.

The grain-oriented electrical steel sheet according to an embodiment of the present disclosure has particularly excellent core loss and magnetic flux density properties. The grain-oriented electrical steel sheet according to an embodiment of the present disclosure may have a magnetic flux density ($B_8$) of 1.90 T or more and an core loss ($W_{17/50}$) of 0.80 W/kg or less. The magnetic flux density ($B_8$) is the magnitude of the magnetic flux density (Tesla) induced under a magnetic field of 800 A/m, and the core loss ($W_{17/50}$) is the magnitude of the core loss (W/kg) induced under the conditions of 1.7 Tesla and 50 Hz.

Hereinafter, specific examples of the present disclosure will be described. However, the following examples are only specific examples of the present disclosure, and the present disclosure is not limited to the following examples.

Examples 1 to 11 and Comparative Examples 1 to 6

After vacuum melting a grain-oriented electrical steel sheet containing 3.4 wt% of Si, 0.061 wt% of C, 0.004 wt% of S, 0.004 wt% of N, 0.030 wt% of Sol-Al, 0.030 wt% of Sb, 0.045 wt% of Sn, 0.030 wt% of P, 0.04 wt% of Cr, 0.02 wt% of Mo, the Cu content changed as shown in Table 1, the reminder of Fe, and inevitable impurities, an ingot was produced, was heated to a temperature of 1,150°C, and was then hot-rolled to a thickness of 2.3 mm. The hot-rolled steel sheet manufactured by hot rolling was heated to a temperature of 1,050°C and then quenched in water.

The hot-rolled annealed steel sheet, which is the heated hot-rolled steel sheet, was pickled and was then cold-rolled once to a thickness of 0.23 mm. The cold-rolled steel sheet that is subjected to the cold rolling step was held at a temperature of 860°C for 200 seconds in a wet mixed gas atmosphere of hydrogen, nitrogen, and ammonia, and subjected to simultaneous decarbonitriding annealing heat treatment to ensure a nitrogen content of 180 ppm.

MgO, which is an annealing separator, was applied to the steel sheet to finally anneal the cold-rolled steel sheet, the final annealing was carried out under a mixed atmosphere of 25 % nitrogen + 75 % hydrogen at a temperature up to 1200°C, and after a temperature of the cold-rolled steel sheet arrives at 1200°C, the steel sheet was maintained for 10 hours or more under a 100% hydrogen atmosphere and was then furnace-cooled. Table 1 below shows magnetic properties such as core loss, magnetic flux density, and magnetic permeability of Examples 1 to 11 and Comparative Examples 1 to 6 according to a change in Cu content, and the values of Equations 1 and 2.

Equation 1 and Equation 2 are as follows:

<Equation 1>

$$0.03 < [Sn] < \left| \sqrt{[Cu]} + [Sb] - 0.3^2 \right|$$

wherein [Cu] and [Sb] refer to the wt% of Cu and Sb, respectively, $\sqrt{}$ refers to a square root, and | | refers to an absolute value.

<Equation 2>

$$\left| \sqrt{[Cu]} - 0.2 \right| < 0.3$$

wherein [Cu] refers to the wt% of Cu, $\sqrt{}$ refers to a square root, and | | refers to an absolute value.

(Table 1)

| Steel type | Cu content (wt%) | Core loss | Magnetic flux density | Magnetic permeabil ity | Equation 1 | Equation 2 | Remark |
|---|---|---|---|---|---|---|---|
| Comp. Example 1 | 0 | 0.90 | 1.88 | 9870 | 0.2 | 0.06 | Comp. Example1 |
| Comp. Example 2 | 0.01 | 0.86 | 1.90 | 14235 | 0.1 | 0.04 | Comp. Example2 |
| Comp. Example 3 | 0.02 | 0.90 | 1.90 | 14953 | 0.05 | 0.08 | Comp. Examples |
| Inventive Example 1 | 0.031 | 0.79 | 1.92 | 23200 | 0.02 | 0.11 | Example 1 |
| Inventive Example 2 | 0.05 | 0.79 | 1.91 | 16526 | 0.02 | 0.16 | Example 2 |
| Inventive Example 3 | 0.07 | 0.79 | 1.93 | 21336 | 0.06 | 0.20 | Example 3 |
| Inventive Example 4 | 0.09 | 0.80 | 1.92 | 16352 | 0.1 | 0.24 | Example 4 |

(continued)

| Steel type | Cu content (wt%) | Core loss | Magnetic flux density | Magnetic permeabil ity | Equation 1 | Equation 2 | Remark |
|---|---|---|---|---|---|---|---|
| Inventive Example 5 | 0.11 | 0.79 | 1.93 | 16502 | 0.13 | 0.27 | Example 5 |
| Inventive Example 6 | 0.13 | 0.78 | 1.91 | 21466 | 0.16 | 0.30 | Example 6 |
| Inventive Example 7 | 0.15 | 0.79 | 1.91 | 21408 | 0.18 | 0.32 | Example 7 |
| Inventive Example 8 | 0.17 | 0.77 | 1.94 | 21115 | 0.21 | 0.35 | Example 8 |
| Inventive Example 9 | 0.19 | 0.77 | 1.91 | 23504 | 0.23 | 0.37 | Example 9 |
| Inventive Example 10 | 0.21 | 0.80 | 1.94 | 20975 | 0.25 | 0.39 | Example 10 |
| Inventive Example 11 | 0.23 | 0.80 | 1.91 | 21010 | 0.27 | 0.41 | Example 11 |
| Comp. Example 4 | 0.25 | 0.88 | 1.90 | 14377 | 0.3 | 0.44 | Comp. Example 4 |
| Comp. Example 5 | 0.27 | 0.88 | 1.89 | 12189 | 0.31 | 0.45 | Comp. Example 5 |
| Comp. Example 6 | 0.29 | 0.90 | 1.90 | 9450 | 0.33 | 0.47 | Comp. Example 6 |

It can be seen from Table 1 that when the Cu content is 0.03 to 0.23 wt%, the core loss and magnetic flux density are significantly superior to those of the comparative examples, and the magnetic permeability is 15,000 or more, so there is a significant difference in magnetic permeability.

Examples 12 to 23 and Comparative Examples 7 to 14

After vacuum melting the grain-oriented electrical steel sheet containing 3.42 wt% of Si, 0.063 wt% of C, 0.005 wt% of S, 0.005 wt% of N, 0.029 wt% of Sol-Al, 0.045 wt% of Sn, 0.031 wt% of P, 0.039 wt% of Cr, 0. 011 wt% of Mo, the Sb and Cu contents changed as shown in Table 2 below, the reminder of Fe, and inevitable impurities, an ingot was produced, was heated to a temperature of 1,145°C, and was then hot-rolled to a thickness of 2.2 mm. The hot-rolled steel sheet manufactured by hot rolling was heated to a temperature of 1,060°C and then quenched in water.
The hot-rolled annealed steel sheet, which is the heated hot-rolled steel sheet, was pickled and was then cold-rolled once to a thickness of 0.23 mm. The cold-rolled steel sheet that is subjected to the cold rolling step was held at a temperature of 870°C for 200 seconds in a wet mixed gas atmosphere of hydrogen, nitrogen, and ammonia, and subjected to simultaneous decarbonitriding annealing heat treatment to ensure a nitrogen content of 190 ppm.
MgO, which is an annealing separator, was applied to the steel sheet to finally anneal the cold-rolled steel sheet, the final annealing was carried out under a mixed atmosphere of 25 % nitrogen + 75 % hydrogen at a temperature up to 1200°C, and after a temperature of the cold-rolled steel sheet arrives at 1200°C, the steel sheet was maintained for 10 hours or more under a 100% hydrogen atmosphere and was then furnace-cooled. Table 2 below shows magnetic properties such as core loss, magnetic flux density, and magnetic permeability of Examples 12 to 23 and Comparative Examples 7 to 14 according to changes in Sb and Cu contents, and the values of Equations 1 and 2.

(Table 2)

| Steel type | Sb content | Cu content | Core loss | Magne tic flux density | Magnetic permeabil ity | Equatio n 1 | Equati on 2 | Remark |
|---|---|---|---|---|---|---|---|---|
| Comp. Example 7 | 0 | 0.05 | 0.90 | 1.89 | 12028 | 0.02 | 0.13 | Comp. Example 7 |

(continued)

| Steel type | Sb content | Cu content | Core loss | Magne tic flux density | Magnetic permeabil ity | Equatio n 1 | Equati on 2 | Remark |
|---|---|---|---|---|---|---|---|---|
| Inventive Example 12 | 0.011 | 0.05 | 0.80 | 1.91 | 16695 | 0.02 | 0.14 | Example 12 |
| Inventive Example 13 | 0.03 | 0.05 | 0.79 | 1.93 | 21369 | 0.02 | 0.16 | Example 13 |
| Inventive Example 14 | 0.049 | 0.05 | 0.80 | 1.94 | 23585 | 0.02 | 0.18 | Example 14 |
| Comp. Example 8 | 0.08 | 0.05 | 0.88 | 1.90 | 14546 | 0.02 | 0.21 | Comp. Example 8 |
| Comp. Example 9 | 0 | 0.11 | 0.89 | 1.88 | 9779 | 0.13 | 0.24 | Comp. Example 9 |
| Inventive Example 15 | 0.01 | 0.05 | 0.77 | 1.94 | 23617 | 0.02 | 0.14 | Example 15 |
| Inventive Example 16 | 0.03 | 0.11 | 0.80 | 1.92 | 18927 | 0.13 | 0.27 | Example 16 |
| Inventive Example 17 | 0.0049 | 0.11 | 0.77 | 1.91 | 16670 | 0.13 | 0.29 | Example 17 |
| Comp. Example 10 | 0.08 | 0.11 | 0.88 | 1.90 | 14615 | 0.13 | 0.32 | Comp. Example 10 |
| Comp. Example 11 | 0 | 0.17 | 0.90 | 1.90 | 14183 | 0.21 | 0.32 | Comp. Example 11 |
| Inventive Example 18 | 0.011 | 0.05 | 0.80 | 1.93 | 21118 | 0.02 | 0.14 | Example 18 |
| Inventive Example 19 | 0.03 | 0.17 | 0.78 | 1.91 | 16537 | 0.21 | 0.35 | Example 19 |
| Inventive Example 20 | 0.049 | 0.17 | 0.80 | 1.93 | 21272 | 0.21 | 0.37 | Example 20 |
| Comp. Example 12 | 0.08 | 0.17 | 0.90 | 1.89 | 11939 | 0.21 | 0.40 | Comp. Example 12 |
| Comp. Example 13 | 0 | 0.23 | 0.85 | 1.88 | 9731 | 0.27 | 0.38 | Comp. Example 13 |
| Inventive Example 21 | 0.011 | 0.05 | 0.79 | 1.94 | 23258 | 0.02 | 0.14 | Example 21 |
| Inventive Example 22 | 0.03 | 0.23 | 0.77 | 1.92 | 18679 | 0.27 | 0.41 | Example 22 |
| Inventive Example 23 | 0.049 | 0.23 | 0.79 | 1.91 | 16631 | 0.27 | 0.43 | Example 23 |
| Comp. Example 14 | 0.08 | 0.23 | 0.89 | 1.90 | 14383 | 0.27 | 0.46 | Comp. Example 14 |

It can be seen from Table 2 that the Examples in which the Sb content satisfies the range of the present disclosure have significantly superior magnetic flux density and a magnetic permeability of 15,000 or more, showing a significant difference compared to those of the Comparative Examples.

Examples 24 to 35 and Comparative Examples 15 to 26

After vacuum melting the grain-oriented electrical steel sheet containing 3.45 wt% of Si, 0.061 wt% of C, 0.005 wt% of S, 0.004 wt% of N, 0.029 wt% of Sol-Al, 0.03 wt% of Sb, 0.033 wt% of P, 0.045 wt% of Cr, 0. 02 wt% of Mo, the Sn and Cu contents changed as shown in Table 3 below, the reminder of Fe, and inevitable impurities, an ingot was produced, was heated to a temperature of 1,150°C, and was then hot-rolled to a thickness of 2.2 mm. The hot-rolled steel sheet manufactured by hot rolling was heated to a temperature of 1,040°C and then quenched in water.

The hot-rolled annealed steel sheet, which is the heated hot-rolled steel sheet, was pickled and was then cold-rolled once to a thickness of 0.23 mm. The cold-rolled steel sheet that is subjected to the cold rolling step was held at a temperature of 865°C for 200 seconds in a wet mixed gas atmosphere of hydrogen, nitrogen, and ammonia, and subjected to simultaneous decarbonitriding annealing heat treatment to ensure a nitrogen content of 200 ppm.

MgO, which is an annealing separator, was applied to the steel sheet to finally anneal the cold-rolled steel sheet, the final annealing was carried out under a mixed atmosphere of 25 % nitrogen + 75 % hydrogen at a temperature up to 1200°C, and after a temperature of the cold-rolled steel sheet arrives at 1200°C, the steel sheet was maintained for 10 hours or more under a 100% hydrogen atmosphere and was then furnace-cooled. Table 2 below shows magnetic properties such as core loss, magnetic flux density, and magnetic permeability of Examples 24 to 35 and Comparative Examples 15 to 26 according to changes in Sb and Cu contents, and the values of Equations 1 and 2.

(Table 3)

| Steel type | Sn content | Cu content | Core loss | Magnetic flux density | Magnetic permeab ility | Equation 1 | Equation 2 | Remark |
|---|---|---|---|---|---|---|---|---|
| Comp. Example 15 | 0 | 0.05 | 0.88 | 1.89 | 12300 | 0.02 | 0.16 | Comp. Example 15 |
| Comp. Example 16 | 0.01 | 0.05 | 0.80 | 1.94 | 23437 | 0.02 | 0.16 | Comp. Example 16 |
| Inventive Example 24 | 0.033 | 0.05 | 0.79 | 1.94 | 23670 | 0.02 | 0.16 | Example 24 |
| Inventive Example 25 | 0.052 | 0.05 | 0.80 | 1.91 | 16677 | 0.02 | 0.16 | Example 25 |
| Inventive Example 26 | 0.075 | 0.05 | 0.78 | 1.94 | 23615 | 0.02 | 0.16 | Example 26 |
| Comp. Example 17 | 0.084 | 0.05 | 0.90 | 1.89 | 11563 | 0.02 | 0.16 | Comp. Example 17 |
| Comp. Example 18 | 0 | 0.11 | 0.89 | 1.90 | 14270 | 0.13 | 0.27 | Comp. Example 18 |
| Comp. Example 19 | 0.011 | 0.11 | 0.77 | 1.93 | 20995 | 0.13 | 0.27 | Comp. Example 19 |
| Inventive Example 27 | 0.032 | 0.11 | 0.79 | 1.92 | 19018 | 0.13 | 0.27 | Example 27 |
| Inventive Example 28 | 0.051 | 3.11 | 0.77 | 1.92 | 19125 | 0.13 | 0.27 | Example 28 |
| Inventive Example 29 | 0.074 | 0.11 | 0.79 | 1.94 | 23409 | 0.13 | 0.27 | Example 29 |
| Comp. Example 20 | 0.083 | 0.11 | 0.86 | 1.90 | 14114 | 0.13 | 0.27 | Comp. Example 20 |

(continued)

| Steel type | Sn content | Cu content | Core loss | Magnetic flux density | Magnetic permeab ility | Equation 1 | Equation 2 | Remark |
|---|---|---|---|---|---|---|---|---|
| Comp. Example 21 | 3 | 0.17 | 0.90 | 1.90 | 13944 | 0.21 | 0.35 | Comp. Example 21 |
| Comp. Example 22 | 0.01 | 0.17 | 0.79 | 1.94 | 23462 | 0.21 | 0.35 | Comp. Example 22 |
| Inventive Example 30 | 0.036 | 0.17 | 0.79 | 1.91 | 16553 | 0.21 | 0.35 | Example 30 |
| Inventive Example 31 | 0.05 | 0.17 | 0.79 | 1.94 | 23395 | 0.21 | 0.35 | Example 31 |
| Inventive Example 32 | 0.079 | 0.17 | 0.79 | 1.93 | 21199 | 0.21 | 0.35 | Example 32 |
| Comp. Example 23 | 0.086 | 0.17 | 0.85 | 1.88 | 10110 | 0.21 | 0.35 | Comp. Example 23 |
| Comp. Example 24 | 3 | 0.23 | 0.87 | 1.88 | 9775 | 0.27 | 0.41 | Comp. Example 24 |
| Comp. Example 25 | 0.01 | 0.23 | 0.78 | 1.94 | 23216 | 0.27 | 0.41 | Comp. Example 25 |
| Inventive Example 33 | 0.031 | 0.23 | 0.79 | 1.92 | 18691 | 0.27 | 0.41 | Example 33 |
| Inventive Example 34 | 0.054 | 0.23 | 0.77 | 1.92 | 19243 | 0.27 | 0.41 | Example 34 |
| Inventive Example 35 | 0.0792 | 0.23 | 0.78 | 1.94 | 23362 | 0.27 | 0.41 | Example 35 |
| Comp. Example 26 | 0.0813 | 0.23 | 0.85 | 1.90 | 14165 | 0.27 | 0.41 | Comp. Example 26 |

It can be seen from Table 3 that the Examples in which the Sn content satisfies the range of the present disclosure have significantly superior magnetic flux density and a magnetic permeability of 15,000 or more, showing a significant difference compared to those of the Comparative Examples.

As such, to address the limitations of improving the magnetic properties of grain-oriented electrical steel sheets, it can be seen that it is possible to control the component content of a composition system composed of alloying elements that can improve magnetism, specifically, alloying elements including Cu, Sb, and Sn.

The present disclosure is not limited to the above embodiments and/or examples, but may be prepared in a variety of different forms, and one of ordinary skilled one having ordinary skill in the art to which the present disclosure belongs will understand that the present disclosure may be practiced in other specific forms without altering the technical idea or essential features of the present disclosure. Therefore, it is to be understood that the embodiments and/or examples described above are illustrative rather than being restrictive in all aspects.

## Claims

1. A grain-oriented electrical steel sheet containing, in wt%, 2.0 to 6.0 wt% of Si, 0.005 to 0.04 wt% of acid-soluble Al, 0.01 to 0.2 wt% of Mn, 0.01 wt% or less of N, 0.0005 to 0.045 wt% of P, 0.010 wt% or less of S, 0.01 to 0.05 wt% of Sb, 0.005 wt% or less of C, 0.03 to 0.08 wt% of Sn, 0.01 to 0.2 wt% of Cr, 0.031 to 0.25 wt% of Cu, 0.01 to 0.05 wt% of Mo, and the remainder of Fe and other unavoidable impurities, and

wherein the following Equation 1 is satisfied:

<Equation 1>

$$0.03 < [Sn] < \left| \sqrt{[Cu]} + [Sb] - 0.3^2 \right|$$

wherein [Cu] and [Sb] refer to the wt% of Cu and Sb, respectively, √ refers to a square root, and | | refers to an absolute value.

2. The grain-oriented electrical steel sheet of claim 1, wherein

the following Equation 2 is satisfied.

<Equation 2>

$$\left| \sqrt{[Cu]} - 0.2 \right| < 0.3$$

wherein [Cu] refers to the wt% of Cu, √ refers to a square root, and | | refers to an absolute value.

3. The grain-oriented electrical steel sheet of claim 1, wherein
the grain-oriented electrical steel sheet has a magnetic permeability of 15,000 or more.

4. A method of manufacturing a grain-oriented electrical steel sheet, the grain-oriented electrical steel sheet containing, in wt%, 2.0 to 6.0 wt% of Si, 0.005 to 0.04 wt% of acid-soluble Al, 0.01 to 0.2 wt% of Mn, 0.01 wt% or less of N, 0.0005 to 0.045 wt% of P, 0.010 wt% or less of S, 0.01 to 0.05 wt% of Sb, 0.02 to 0.08 wt% of C, 0.03 to 0.08 wt% of Sn, 0.03 to 0.08 wt% of Sn, 0.01 to 0.2 wt% of Cr, 0.031 to 0.25 wt% of Cu, 0.01 to 0.05 wt% of Mo, and the remainder of Fe and other unavoidable impurities, comprising:

heating a slab that satisfies the following Equation 1;
manufacturing a hot-rolled steel sheet by hot rolling the heated slab;
cold rolling the hot-rolled steel sheet obtained through heat treatment;
performing primary recrystallization on the cold-rolled steel sheet obtained through the cold rolling; and
performing secondary recrystallization on the cold-rolled steel sheet that is subjected to the primary recrystallization.

<Equation 1>

$$0.03 < [Sn] < \left| \sqrt{[Cu]} + [Sb] - 0.3^2 \right|$$

wherein [Sn], [Cu], and [Sb] refer to the wt% of Sn, Cu, and Sb, respectively, √ refers to a square root, and | | refers to an absolute value.

5. The method of claim 4, wherein
the reheating of the slab is carried out at 1,250°C or less.

**6.** The method of claim 4, further comprising,

after the manufacturing of the hot-rolled steel sheet,
heat-treating the hot-rolled steel sheet,
wherein the heat-treating of the hot-rolled steel sheet is carried out at 1,000 to 1,150°C.

**7.** The method of claim 4,
further comprising, after the cold rolling of the hot-rolled steel sheet, performing intermediate annealing on the cold-rolled steel sheet that is subjected to primary cold rolling.

**8.** The method of claim 4,
further comprising, after the performing of the intermediate annealing on the cold-rolled steel sheet, performing secondary cold rolling on the cold-rolled steel sheet.

**9.** The method of claim 4, wherein
in the performing of the primary recrystallization on the cold-rolled steel sheet, decarburization annealing and nitriding are carried out simultaneously on the cold-rolled steel sheet obtained through the cold rolling.

**10.** The method of claim 4, wherein
the performing of the secondary recrystallization on the cold-rolled steel sheet is carried out at a temperature equal to or more than a decarbonization temperature at which the primary recrystallization is completed and equal to or less than 1,230°C.

## INTERNATIONAL SEARCH REPORT

| International application No. |
|---|
| **PCT/KR2022/020774** |

**A. CLASSIFICATION OF SUBJECT MATTER**

**C22C 38/34**(2006.01)i; **C22C 38/20**(2006.01)i; **C22C 38/22**(2006.01)i; **C21D 8/12**(2006.01)i; **H01F 1/147**(2006.01)i

According to International Patent Classification (IPC) or to both national classification and IPC

**B. FIELDS SEARCHED**

Minimum documentation searched (classification system followed by classification symbols)

C22C 38/34(2006.01); C21D 8/12(2006.01); C22C 38/00(2006.01); C22C 38/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 방향성 전기강판(oriented electrical steel), 가열(heating), 열간압연(hot rolling), 소둔(annealing), 냉간압연(cold rolling), 재결정(recrystallization)

**C. DOCUMENTS CONSIDERED TO BE RELEVANT**

| Category* | Citation of document, with indication, where appropriate, of the relevant passages | Relevant to claim No. |
|---|---|---|
| X | KR 10-2020-0076517 A (POSCO) 29 June 2020 (2020-06-29)<br>See paragraphs [0057], [0090] and [0101]-[0111]; and claims 1 and 3. | 1-10 |
| X | KR 10-2019-0078163 A (POSCO) 04 July 2019 (2019-07-04)<br>See paragraphs [0034], [0064]-[0067] and [0071]; and claims 1 and 3-5. | 1-2,4-8,10 |
| A | KR 10-2020-0066062 A (POSCO) 09 June 2020 (2020-06-09)<br>See claims 5-13. | 1-10 |
| A | JP 2017-101311 A (JFE STEEL CORP.) 08 June 2017 (2017-06-08)<br>See paragraphs [0014]-[0016]. | 1-10 |
| A | JP 2017-002356 A (JFE STEEL CORP.) 05 January 2017 (2017-01-05)<br>See claims 1-7. | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 March 2023** | **24 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/020774**

| Patent document cited in search report | | | Publication date (day/month/year) | Patent family member(s) | | | Publication date (day/month/year) |
|---|---|---|---|---|---|---|---|
| KR | 10-2020-0076517 | A | 29 June 2020 | CN | 113242911 | A | 10 August 2021 |
| | | | | EP | 3901311 | A1 | 27 October 2021 |
| | | | | EP | 3901311 | A4 | 02 March 2022 |
| | | | | JP | 2022-514794 | A | 15 February 2022 |
| | | | | KR | 10-2164329 | B1 | 12 October 2020 |
| | | | | US | 2022-0042135 | A1 | 10 February 2022 |
| | | | | WO | 2020-130328 | A1 | 25 June 2020 |
| KR | 10-2019-0078163 | A | 04 July 2019 | CN | 111566250 | A | 21 August 2020 |
| | | | | CN | 111566250 | B | 17 December 2021 |
| | | | | EP | 3733914 | A1 | 04 November 2020 |
| | | | | EP | 3733914 | A4 | 04 November 2020 |
| | | | | JP | 2021-509150 | A | 18 March 2021 |
| | | | | JP | 7037657 | B2 | 16 March 2022 |
| | | | | KR | 10-2099866 | B1 | 10 April 2020 |
| | | | | US | 2021-0071280 | A1 | 11 March 2021 |
| | | | | WO | 2019-132361 | A1 | 04 July 2019 |
| KR | 10-2020-0066062 | A | 09 June 2020 | CN | 113166892 | A | 23 July 2021 |
| | | | | EP | 3889297 | A1 | 06 October 2021 |
| | | | | EP | 3889297 | A4 | 30 March 2022 |
| | | | | JP | 2022-509864 | A | 24 January 2022 |
| | | | | KR | 10-2142511 | B1 | 07 August 2020 |
| | | | | US | 2022-0290277 | A1 | 15 September 2022 |
| | | | | WO | 2020-111741 | A1 | 04 June 2020 |
| JP | 2017-101311 | A | 08 June 2017 | JP | 6439665 | B2 | 19 December 2018 |
| JP | 2017-002356 | A | 05 January 2017 | BR | 112017024520 | A2 | 24 July 2018 |
| | | | | CA | 2985598 | A1 | 15 December 2016 |
| | | | | CA | 2985598 | C | 10 March 2020 |
| | | | | CN | 107614725 | A | 19 January 2018 |
| | | | | CN | 107614725 | B | 10 March 2020 |
| | | | | EP | 3309271 | A1 | 18 April 2018 |
| | | | | EP | 3309271 | A4 | 04 July 2018 |
| | | | | EP | 3309271 | B1 | 23 December 2020 |
| | | | | JP | 6350398 | B2 | 04 July 2018 |
| | | | | KR | 10-2017-0141252 | A | 22 December 2017 |
| | | | | KR | 10-2057126 | B1 | 18 December 2019 |
| | | | | MX | 2017015241 | A | 16 March 2018 |
| | | | | RU | 2686125 | C1 | 24 April 2019 |
| | | | | US | 10844452 | B2 | 24 November 2020 |
| | | | | US | 2018-0171425 | A1 | 21 June 2018 |
| | | | | WO | 2016-199423 | A1 | 15 December 2016 |

Form PCT/ISA/210 (patent family annex) (July 2022)